# EUROPÄISCHE PATENTSCHRIFT

(11) **EP 2 039 549 B1**
(45) Veröffentlichungstag und Bekanntmachung des Hinweises auf die Patenterteilung: **19.01.2011**
(21) Anmeldenummer: 08164813.1
(22) Anmeldetag: 22.09.2008
(51) Int. Cl.: B60J 5/06, E05D 15/10, B61D 19/00

(54) **Schwenkschiebetürsystem**
Swivel sliding door system
Système de porte coulissante pivotante

(43) Veröffentlichungstag der Anmeldung: 25.03.2009
(73) Patentinhaber: TER GmbH Komponenten für Aufzüge und Verkehrsmittel, 42551 Velbert (DE)
(72) Erfinder: Goldbach, Horst, 40883 Ratingen (DE)
(74) Vertreter: Bergmann, Michael

(56) Entgegenhaltungen:
- DE-A1- 19 946 501
- DE-C- 827 504
- DE-U1-202005 015 166

## Beschreibung

Die Erfindung richtet sich auf ein Schwenkschiebetürsystem eines Fahrzeugs, insbesondere eines Personenbeförderungsfahrzeugs, mit zumindest einem an einer horizontalen Tragstange einer Lagereinheit verschiebbar gelagerten Türflügel der zum Öffnen aus einer Türöffnung ausfahrbar und in seiner Offenstellung an einer Außenwand des Fahrzeugs längs verschiebbar ist und in Bewegungsumkehr die Türöffnung wieder verschließt, wobei die Lagereinheit senkrecht zur Verschieberichtung des zumindest einen Türflügels aus- und einfahrbar ist und eine zur Tragstange parallele Riegelwelle, die über ein Koppelgetriebe die Lagereinheit aus- und einfährt, und einen elektrischen Getriebemotor aufweist, der mit der Riegelwelle verbunden ist und diese rotatorisch antreibt.

Türsysteme von Personenbeförderungsfahrzeugen mit einer Innenschwenktür, einer Außenschwenktür, aber auch mit einer Schwenkschiebetür sind aus dem Stand der Technik bekannt, wobei die vorliegende Erfindung insbesondere bei Außenschwenkschiebetürsystemen Verwendung findet.

Ein Schwenkschiebetürsystem der Eingangs genannten Art ist aus der DE 199 465 01 C2 bekannt. Dieses Schwenkschiebetürsystem weist einen rechten und einen linken Türflügel zum Verschließen und zum Freigeben einer in einer Außenwand eines Personenbeförderungsfahrzeugs ausgebildeten Türöffnung auf. Die beiden Türflügel sind jeweils an einer zugeordneten Tragstange gelagert. Die beiden Tragstangen sind übereinander liegend angeordnet und erstrecken sich parallel zur Fahrzeugaußenwand sowie in horizontaler Ausrichtung innerhalb der Türöffnung in deren oberen Bereich. Ferner sind die Tragstangen jeweils mit ihren beiden Enden in zwei sich gegenüberliegenden Seitenwangen fest angebracht. Die Seitenwangen bilden zusammen mit den beiden Tragstangen eine Lagereinheit für die beiden Türflügel.

Nachteilig bei diesem Stand der Technik ist, dass für jeden Türflügel jeweils eine separate Tragstange vorgesehen ist, so dass bei einem zweiflügeligen Türsystem zwei Tragstangen übereinander liegend angeordnet sein müssen, was zu einer Erhöhung der Bauhöhe der Lagereinheit führt. Darüber hinaus weist diese Konstruktion den Nachteil auf, dass die Lagereinheit für die beiden Türflügel innerhalb der Türöffnung angeordnet ist. Die Lagereinheit nimmt somit einen Teilbereich der zum Ein- und Aussteigen von Personen vorgesehenen Türöffnung in Anspruch, was bei der Dimensionierung der Höhe der Türöffnung berücksichtigt werden muss, damit zwischen der im oberen Bereich der Türöffnung angeordneten Lagereinheit und dem Kopf einer durch die Türöffnung hindurch tretenden Person ein derart großer Abstand vorhanden ist, dass die Lagereinheit kein den Kopf der Person gefährdendes Hindernis darstellt.

Es besteht somit das Bedürfnis, eine Lagereinheit eines Schwenkschiebetürsystems zu schaffen, die eine geringe Bauhöhe aufweist und außerhalb der Türöffnung montierbar ist, so dass sie problemlos auch bei oberhalb der Türöffnung abgeschrägten Fahrzeugseitenwänden oberhalb der Türöffnung zwischen dieser und dem Fahrzeugdach befestigbar ist.

Der Erfindung liegt die Aufgabe zugrunde, eine Lösung zu schaffen, die auf konstruktiv einfache Weise und kostengünstig ein vereinfachtes und verbessertes Schwenkschiebetürsystem bereitstellt.

Bei einem Schwenkschiebetürsystem der eingangs bezeichneten Art wird diese Aufgabe erfindungsgemäß dadurch gelöst, dass die Lagereinheit und die Tragstange oberhalb der Türöffnung in den Fahrzeuginnenraum zurückversetzt angeordnet sind und der zumindest eine Türflügel mit der Tragstange über eine winkelförmige Vertikalhalterung verbunden ist.

Vorteilhafte und zweckmäßige Ausgestaltungen und Weiterbildungen der Erfindung ergeben sich aus den Unteransprüchen.

Durch das erfindungsgemäße Schwenkschiebetürsystem wird eine kompakte Baueinheit realisiert, die sich durch eine Lagereinheit mit geringer Bauhöhe auszeichnet. Dies ist dadurch möglich, dass auch bei zweiflügeligen Schwenkschiebetürsystemen beide Türflügel auf nur einer Tragstange gelagert werden können, so dass eine zweite Tragstange nicht mehr erforderlich ist. Darüber hinaus ist eine Überdimensionierung der Türöffnung nicht mehr erforderlich, da die Lagereinheit oberhalb und außerhalb der Türöffnung angeordnet ist. Auch stellen oberhalb der Türöffnung abgeschrägte Fahrzeugseitenwände aufgrund der geringen Bauhöhe der Lagereinheit kein Hindernis beim Einbau der Lagereinheit mehr dar.

Um eine kompakte Bauweise zur Lagerung der Türblätter zu ermöglichen, sieht die Erfindung in Ausgestaltung vor, dass die Tragstange an ihren beiden Endseiten jeweils an einer Seitenwange der Lagereinheit befestigt ist und dass die jeweilige Seitenwange mittels zumindest einer Rolle in einer Führungsschiene verschiebbar gelagert ist. Dadurch ist sichergestellt, dass die Lagereinheit beim Öffnen und Schließen der Türöffnung quer zur Fahrzeuglängsachse aus- und einfahrbar ist.

Eine konstruktiv einfach zu realisierende Möglichkeit einer kompakten Bauweise des Schwenkschiebtürsystems besteht darin, dass die jeweilige Führungsschiene als U-Schiene ausgebildet ist, die über ein Basisblech oder ein Trägerelement an der Fahrzeuginnenwand oder an der Fahrzeugkarosserie befestigt ist. Bei einer Befestigung der Führungsschienen an einem Basisblech kann das Schwenkschiebesystem vormontiert werden und als komplette Einheit im Fahrzeug angebracht werden, so dass ein Zusammenbau der Einzelteile des Schwenkschiebetürsystems im Fahrzeug entfällt.

Zur Reduzierung des Einbauraums und zur kompakten Ausgestaltung des Schwenkschiebetürsystems ist es von Vorteil, wenn die jeweilige Führungsschiene quer zur Fahrzeugaußenwand und auf der der Tragstange zugewandten Seite der jeweiligen Seitenwange angrenzend an dieser angeordnet ist. Bei aus der Praxis bekannten Systemen sind die Führungsschienen auf der von der Tragstange weg weisenden Seite der Seitenwangen angeordnet, so dass hierfür ein zusätzlicher Einbauraum in Anspruch genommen wird.

Zur Lagerung und Befestigung des oder der Türflügel sieht die Erfindung in Weiterbildung vor, dass der zumindest eine Türflügel eine Halterung mit einer als Rohrabschnitt ausgebildeten Kugellängsführung aufweist, wobei die Kugellängsführung an der Tragstange verschiebbar gelagert ist. Durch eine entsprechende Länge des Rohrabschnittes und der Kugellängsführung wird eine stabile und verbindungssteife Lagerung des oder der Türflügel an den Tragstangen sichergestellt.

Dabei ist es besonders vorteilhaft, wenn in Schließstellung des zumindest einen Türflügels der Rohrabschnitt im Wesentlichen mit einer Schließkante des Türflügels bündig abschließt. Dadurch ist es möglich, das Schwenkschiebetürsystem auf konstruktiv sehr einfache Weise von einem zweiflügeligen auf ein einflügeliges Schwenkschiebetürsystem zu modifizieren, da die einem Türflügel zugeordneten Bauteile keinen störenden Einfluss auf die Funktion der Bauteilen des anderen Türflügels ausüben.

Um eine Steuerung des Getriebemotors zu vermeiden, sieht die Erfindung in Ausgestaltung vor, dass die Lagereinheit eine Gewindespindel umfasst, wobei der elektrische Getriebemotor die Gewindespindel und die Lagereinheit über eine mechanische Kopplung antreibt.

Damit die Bauhöhe der Lagereinheit aufgrund des Getriebemotors nicht zunimmt, ist es weiterhin von Vorteil, wenn der elektrische Getriebemotor in der Lagereinheit parallel zur Gewindespindel angeordnet ist und über Zahnräder mit der Gewindespindel in Antriebsverbindung steht.

Eine sehr kompakte Bauweise der Lagereinheit lässt sich ferner dadurch realisieren, dass die Gewindespindel in den beiden Seitenwangen der Lagereinheit drehbar gelagert ist.

In zweckmäßiger Ausgestaltung der Erfindung ist ferner vorgesehen, dass die Gewindespindel parallel zu der Tragstange und der Riegelwelle angeordnet ist. Auch diese Maßnahme trägt zur Reduzierung der Bauhöhe bei.

Um eine dem praktischen Bedarf des Schwenkschiebetürsystems anpassbare Verriegelung zu ermöglichen, welche auch bei stärkeren Erschütterungen des Fahrzeugs während der Fahrt eine Entriegelung des oder der Türflügel verhindert, sieht die Erfindung weiterhin vor, dass in Schließstellung des zumindest einen Türflügels eine als Biegefeder ausgebildete Rückstellfeder mit einer die Federkraft der Rückstellfeder einstellbaren Korrektureinrichtung die Riegelwelle in einer Totpunktstellung gedrückt hält.

Eine besonders kompakte Bauform mit einer geringen Anzahl von Bauteilen kann in Ausgestaltung der Erfindung dadurch erreicht werden, dass ein an dem zumindest einen Türflügel befestigter Verbindungsflansch, die Vertikalhalterung, der Rohrabschnitt, eine an einem Verbindungsarm angebrachte Spindelmutter und eine Halterung einstückig, vorzugsweise als ein Gussteil, ausgebildet sind.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhaft ein bevorzugtes Ausführungsbeispiel der Erfindung dargestellt ist. In der Zeichnung zeigt:
- Figur 1: eine schematische Frontansicht eines erfindungsgemäßen Schwenkschiebetürsystems,
- Figur 2: eine detaillierte Frontansicht des oberhalb der Türöffnung angeordneten Schwenkschiebetürsystems,
- Figur 3: eine Schnittansicht entlang der Line A-A in Figur 2,
- Figur 4: eine Schnittansicht entlang der Linie B-B in Figur 2 und
- Figur 5: eine Draufsicht auf eine Führungsschiene.

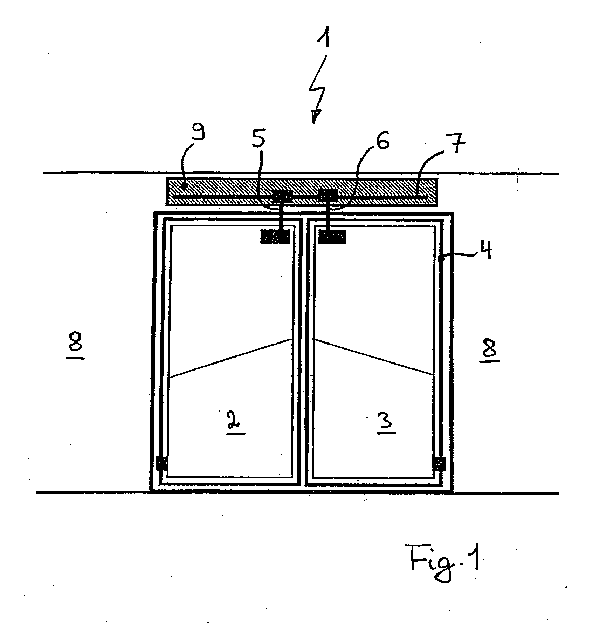

Die Figur 1 zeigt ein Schwenkschiebetürsystem 1 eines nicht näher dargestellten Personenbeförderungsfahrzeugs mit einem linken und einem rechten Türflügel 2 und 3, die eine Türöffnung 4 des Personenbeförderungsfahrzeugs verschließen. Das nachstehend im Detail erläuterte Schwenkschiebetürsystem 1 ist aber nicht auf ein solches zweiflügeliges Schwenkschiebetürsystem 1 beschränkt, sondern kann auch bei einflügeligen, d.h. lediglich einen Türflügel 2 oder 3 aufweisenden, Schwenkschiebetürsystemen 1 verwendet werden. Jeder der beiden Türflügel 2, 3 ist in seinem oberen Bereich der Türöffnung 4 über eine jeweilige Halterung 5 und 6 an einer Tragstange 7, die sich parallel zu einer Fahrzeugaußenwand 8 oberhalb der Türöffnung 4 erstreckt, verschiebbar gelagert. Die Tragstange 7 gehört zu einer im oberen Bereich der Türöffnung 4 in Figur 1 nur schematisch dargestellten Lagereinheit 9, wobei eine nicht näher dargestellte Antriebsvorrichtung die beiden Türflügel 2 und 3 zum Öffnen und Verschließen der Türöffnung 4 sowie bei ihrer Verschiebung längs der Fahrzeugaußenwand 8 antreibt und bewegt.

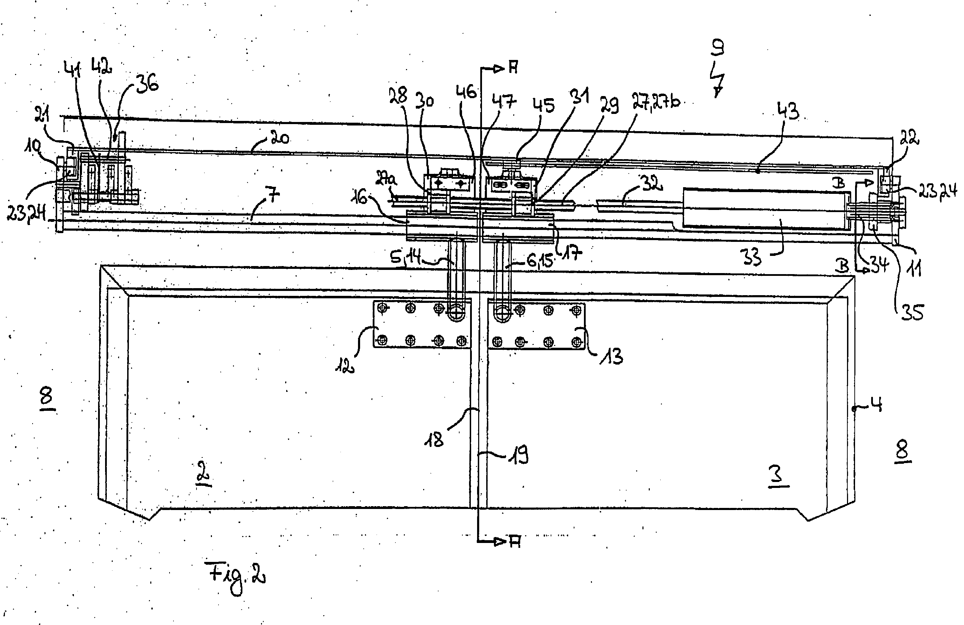

Die in der Figur 2 im Detail dargestellte Lagereinheit 9 umfasst neben der Tragstange 7 zusätzlich zwei sich gegenüberliegende Seitenwangen 10 und 11, in denen die Tragstange 7 mit ihren beiden Enden drehfest angebracht ist. Die Tragstange 7 und die beiden Seitenwangen 10, 11 bilden die Lagereinheit 9 für die beiden Türflügel 2, 3. An dem linken und dem rechten Türflügel 2 und 3 ist jeweils unterhalb der Oberkante des entsprechenden Türflügels 2, 3 ein Verbindungsflansch 12 bzw. 13 befestigt, an dem wiederum jeweils die in Form einer winkelförmigen Vertikalhalterung 14 bzw. 15 ausgebildete Halterung 5 bzw. 6 angebracht ist. Der linke Türflügel 2 ist über einen mit der Vertikalhalterung 14 verbundenen Rohrabschnitt 16 und der rechte Türflügel 3 über einen mit der Vertikalhalterung 15 verbundenen Rohrabschnitt 17 mit der Tragstange 7 verbunden. Die Rohrabschnitte 16, 17 weisen jeweils eine die Tragstange 7 umgreifende Kugellängsführung auf, so dass die Türflügel 2, 3 verschiebbar an der Tragstange 7 gelagert sind. Die Rohrabschnitte 16 und 17 sind in Schließstellung, bei der die Türflügel 2, 3 die Türöffnung 4 verschließen, derart an der Tragstange 7 angeordnet, dass sie mit einer jeweiligen Hauptschließkante 18, 19 des Türflügels 2, 3 nahezu bündig abschließen. Die Rohrabschnitte 16 und 17 erstrecken sich demnach bei geschlossenen Türflügeln 2, 3 nicht über die jeweilige Hauptschließkante 18, 19 des jeweiligen Türflügels 2, 3 hinaus, so dass eine Modifizierung auf ein einflügeliges Schwenkschiebetürsystem 1 auf konstruktiv einfache Weise möglich ist, da keine Bauteile des jeweiligen Türflügels 2, 3 im Einbaubereich des anderen Türflügels 2, 3 angeordnet sind.

Ein Basisblech 20, an dem die Lagereinheit 9 und somit die Türflügel 2, 3 gelagert sind, erstreckt sich oberhalb und über die gesamte Länge der Türöffnung 4 und ist über der Tragstange 7 angeordnet. Das Basisblech 20 dient dazu, das Schwenkschiebetürsystem 1 vor der Montage im Fahrzeuginneren komplett zusammenzubauen, so dass ein Zusammenbau der Einzelteile des Schwenkschiebetürsystems 1 im Fahrzeuginneren nicht mehr notwendig ist und das vormontierte Schwenkschiebetürsystem 1 als eine Baueinheit im Fahrzeuginnenraum befestigt werden kann.

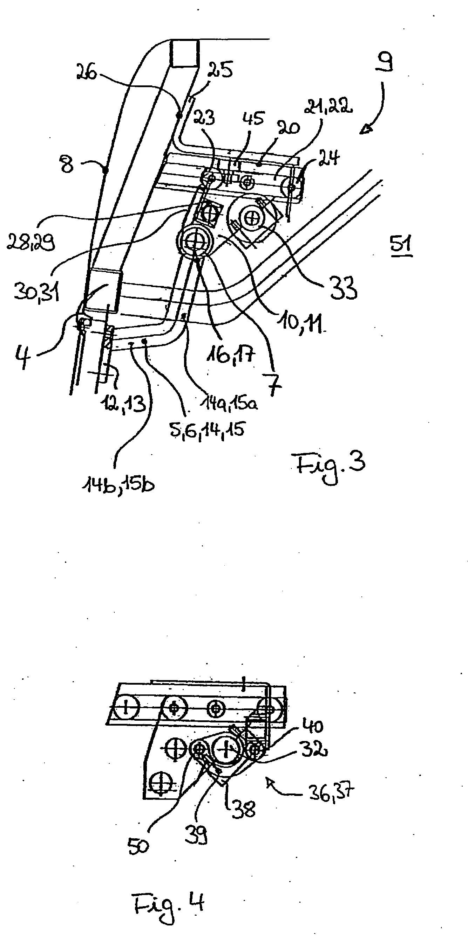

Zwei quer zur Fahrzeugaußenwand 8 angeordnete Führungsschienen 21 und 22, die parallel zueinander verlaufen und U-förmig ausgebildet sind, sind an den beiden sich gegenüberliegenden Längsenden des Basisblechs 20 befestigt. Die Führungsschienen 21, 22 sind jeweils auf der der Tragstange 7 zugewandten Seite der jeweiligen Seitenwangen 10, 11 angeordnet und befestigt. Ferner sind in jeweils einer der beiden Führungsschienen 21, 22 Rollen 23, 24 eingesetzt, die quer zur Fahrzeugaußenwand 8 in der jeweiligen Führungsschiene 21, 22 verschiebbar sind. Figur 3 beschränkt sich auf eine Darstellung eines Längsendes des Basisblechs 20 und zeigt die in einer der beiden Führungsschienen 21, 22 angeordneten Rollen 23, 24. Die Rollen 23, 24 sind mit der zugeordneten Seitenwange 10 bzw. 11 verbunden und drehbar an dieser gelagert, so dass die beiden über die Tragstange 7 verbundenen Seitenwangen 10 und 11 jeweils durch die zwei Rollen 23, 24 in den Führungsschienen 21, 22 verfahrbar gelagert sind. Somit ist die Lagereinheit 9 im Wesentlichen senkrecht zur Fahrzeugaußenwand 8 in den beiden Führungsschienen 21, 22 horizontal verfahrbar. Alternativ können die beiden Führungsschienen 21, 22 anstatt an dem Basisblech 20 über ein wie in Figur 3 dargestelltes, als Winkel ausgebildetes Trägerelement 25 an dem Basisblech 20 befestigt werden, welches dann an der Fahrzeuginnenwand 26 montiert wird.

Die in Figur 3 dargestellte Lagereinheit 9 ist oberhalb und außerhalb der Türöffnung 4 und in den Fahrzeuginnenraum 51 zurückversetzt angeordnet. Insbesondere ist die Lagereinheit 9 außerhalb der Türöffnung 4 angeordnet, was infolge der speziellen Ausgestaltung der winkelförmigen Vertikalhalterungen 14, 15 möglich ist. Die Vertikalhalterungen 14, 15 sind jeweils in Form eines Winkelelements ausgebildet, dessen einer Winkelabschnitt 14a, 15a mit dem jeweiligen Rohrabschnitt 16, 17 verbunden ist und dessen anderer Winkelabschnitt 14b, 15b an dem jeweiligen Verbindungsflansch 12, 13 befestigt ist. Lediglich der an dem jeweiligen Verbindungsflansch 12, 13 befestigte Winkelabschnitt 14b, 15b ragt in den Bereich der Türöffnung 4 minimal hinein, was aber bei der Dimensionierung der Türöffnung 4 nicht berücksichtigt werden braucht, da die Winkelabschnitte 14b, 15b der Vertikalhalterungen 14, 15 beim

Öffnen der Türflügel 2, 3 mit diesen mitbewegt werden und somit nicht störend im Bereich der Türöffnung 4 verbleiben.

Eine Bewegung der beiden Türflügel 2, 3 längs der Tragstange 7 erfolgt über eine an sich bekannte Gewindespindel 27, die parallel zu der Tragstange 7 angeordnet und an den beiden Seitenwangen 10, 11 drehbar gelagert ist. Die Gewindespindel 27 ist in zwei Hälften 27a und 27b unterteilt, die zueinander gegenläufige Gewindesteigungen aufweisen, so dass beim Öffnungsvorgang der linke Türflügel 2 nach links und der rechte Türflügel 3 nach rechts bewegt wird. Auf jeder der zwei Hälften 27a, 27b der Gewindespindel 27 ist jeweils eine Spindelmutter 28, 29 angeordnet, die an dem entsprechenden Rohrabschnitt 16, 17 befestigt ist. Die Spindelmuttern 28, 29 umgreifen einen entsprechenden Gewindeabschnitt der Gewindespindel 27. Darüber hinaus ist jede Spindelmutter 28, 29 an einem Verbindungsarm 30, 31 befestigt, der mit einem entsprechenden Rohrabschnitte 16, 17 verbunden ist. Auf diese Weise ist der linke Türflügel 2 über den Verbindungsflansch 12, die Vertikalhalterung 14 und den Rohrabschnitt 16 mit der an dem Verbindungsarm 30 befestigten Spindelmutter 28 verbunden. Entsprechend ist der rechte Türflügel 3 über den Verbindungsflansch 13, die Vertikalhalterung 15 und den Rohrabschnitt 17 mit der an dem Verbindungsarm 31 befestigten Spindelmutter 29 verbunden. Bei einer Rotation der Gewindespindel 27 in eine erste Drehrichtung führen die beiden Spindelmuttern 28, 29 eine voneinander weg weisende Bewegung entlang der Gewindespindel 27 durch, so dass die beiden Türflügel 2, 3 entlang der Tragstange 7 jeweils in entgegen gesetzter Richtung längs der Fahrzeugaußenwand 8 bewegt werden und die Türöffnung 4 freigeben. Demgegenüber führen die beiden Spindelmuttern 28, 29 bei einer Rotation der Gewindespindel 27 in eine der ersten Drehrichtung entgegen gesetzte Richtung eine aufeinander zu weisende Bewegung entlang der Gewindespindel 27 durch, so dass sich die beiden Türflügel 2, 3 zur Verschließung der Türöffnung 4 in Schließposition entlang der Tragstange 7 aufeinander zu bewegen.

In den Seitenwangen 10, 11 ist ferner eine Riegelwelle 32 drehbar gelagert, die parallel zu der Gewindespindel 27 angeordnet ist. An der Riegelwelle 32 ist in deren Längsrichtung ein elektrischer Getriebemotor 33 angeordnet und mit dieser verbunden, dessen Abtriebswelle 34 in der in Figur 2 rechten Seitenwange 11 drehbar gelagert ist. Zwischen dem elektrischen Getriebemotor 33 und der die Abtriebswelle 34 lagernden Seitenwange 11 ist auf der Abtriebswelle 34 ein Zahnrad 35 drehfest angebracht, dass mit einem nicht näher dargestellten Zahnrad, das drehfest auf der Gewindespindel 27 angebracht ist, in Eingriff steht.

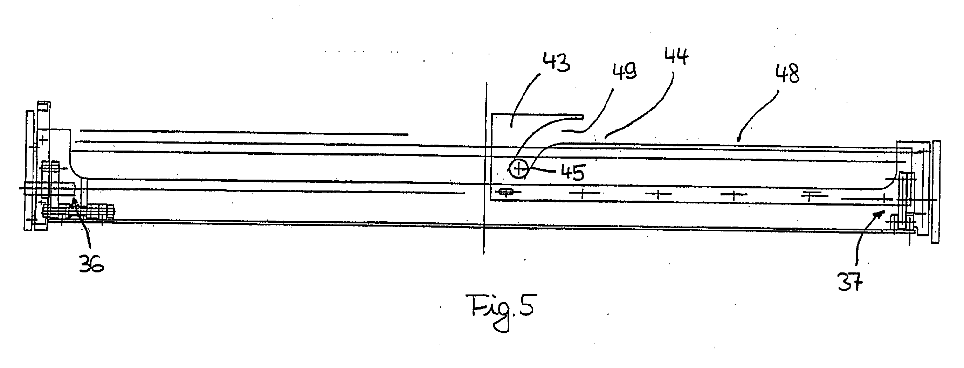

Ein an sich bekanntes Koppelgetriebe ist ferner im Bereich der linken Seitenwange 10 ausgebildet, wohingegen ein im Wesentlichen gleich aufgebautes Koppelgetriebe zwischen dem elektrischen Getriebemotor 33 und der rechten Seitenwange 11 ausgebildet ist. Beide Koppelgetriebe, die in Figur 5 nur schematisch dargestellt sind, weisen die Funktion jeweils einer an sich bekannten Verriegelung 36, 37 auf. Jede Verriegelung 35, 36 umfasst eine in Figur 4 dargestellte Segmentscheibe 38, die mit der Riegelwelle 32 drehfest verbunden ist, und ein Verbindungselement 39 mit zwei Schenkeln, von denen einer an einer Lagerachse 40 schwenkbar gelagert ist. Das freie Ende des anderen Schenkels ist mittels eines Verbindungsstifts 50 an der Segmentscheibe 38 drehbar gelagert. Die beiden Schenkel sind derart ausgebildet, dass sie eine gebogene Form aufweisen und die Riegelwelle 32 in Schließstellung der Türflügel 2, 3 abschnittsweise umgreifen. Bei Rotation der Riegelwelle 32 wird die Segmentscheibe 38 und somit der drehbar an der Segmentscheibe 38 gelagerte Schenkel des Verbindungselements 39 nach unten verschwenkt, so dass die Riegelwelle 32 freigegeben ist. Gleichzeitig bewirkt die Rotation der Riegelwelle 32, dass über die in den Seitenwangen 10, 11 gelagerte Riegelwelle 32 die gesamte Lagereinheit 9 über die Rollen 23, 24 in den Führungsschienen 21, 22 nach außen gefahren wird, so dass gleichzeitig die Türflügel 2, 3 aus der Türöffnung 4 heraus bewegt werden und ein synchrones Aus-und Einfahren der gesamten Lagereinheit 9 ohne ein Verkanten sichergestellt ist.

Zwei an sich bekannte Führungsschienen 43 sind an der Unterseite des Basisblechs 20 angebracht und erstrecken sich jeweils oberhalb sowie im Wesentlichen längs einer jeweiligen Hälfte 27a, 27b der Gewindespindel 27. In den Figuren 2 und 5 ist aus Gründen der Übersichtlichkeit nur eine der beiden Führungsschienen 43 dargestellt, die oberhalb der rechten Hälfte 27b der Gewindespindel 27 angeordnet ist. In einen in der jeweiligen Führungsschiene 43 ausgebildeten Führungsabschnitt 44 greift eine Führungsrolle 45 ein. Die Führungsrolle 45 ist in einer jeweiligen Halterung 46, 47, die mit einem entsprechenden Verbindungsarm 30, 31 verbunden ist und einem entsprechenden Türflügel 2, 3 zugeordnet ist, drehbar gelagert. Der an sich bekannte Führungsabschnitt 44 weist einen zu der Tragstange 7 parallelen Abschnitt 48 und einen bogenförmigen Abschnitt 49 auf. In den beiden Abschnitten 48, 49 der jeweiligen Führungsschienen 43 wird die entsprechende Führungsrolle 45 während der Öffnungs- und Schließbewegung der Türflügel 2, 3 nach Art einer schwenkschiebeartigen Bewegung geführt, so dass beim Öffnungsvorgang die Türflügel 2, 3 aus der Türöffnung 4 entlang einer kurven- und bogenförmigen Bahn und anschließend entlang der Fahrzeugaußenwand 8 bewegt werden.

Der Bewegungsablauf beim Öffnen und Schließen der Türflügel 2, 3 entspricht im Wesentlichen dem aus der DE 199 46 501 C2 bekannten Bewegungsablauf, so dass von einer detaillierten Erläuterung abgesehen wird.

In der in Figur 2 dargestellten Schließstellung sind die beiden Türflügel 2, 3 in der Türöffnung 4 angeordnet und verschließen diese. Die Lagereinheit 9 befindet sich dabei in einer wie in Figur 3 dargestellten zurückgefahrenen Stellung. Zum Öffnen der Türflügel 2, 3 wird der elektrische Getriebemotor 33 eingeschaltet, so dass das Drehmoment des Motors sowohl eine Rotation der Riegelwelle 32 als auch eine Rotation der Abtriebswelle 34 erzeugt. Eine anfängliche Rotation der Abtriebswelle 34 wird über das Zahnrad 35 auf die Gewindespindel 27 übertragen und versetzt diese in Rotation, wodurch die jeweilige Spindelmutter 28, 29 in Längsrichtung bewegt wird. Da die jeweilige Spindelmutter 28, 29 mit dem zugeordneten Rohrabschnitt 16, 17 der Türflügel 2, 3 fest verbunden ist und darüber hinaus die jeweilige Führungsrolle 45 in der Führungsschiene 43 gelagert ist, kann ausgehend von der Schließstellung in einer ersten Bewegung, bei der die Führungsrolle 45 in dem jeweiligen bogenförmigen Abschnitt 49 verläuft, nur ein kleiner Rotationsanteil des Getriebemotors 33 über die Gewindespindel 27 in eine Längsverschiebung umgesetzt werden, wohingegen ein großer Rotationsanteil über die Riegelwelle 32 umgesetzt wird. Durch die Rotation der Riegelwelle 32 und damit der Segmentscheibe 38 wird der drehbar an der Segmentscheibe 38 gelagerte Schenkel des Verbindungselements 39 nach unten geschwenkt, während sich die Riegelwelle 32 mit der Lagereinheit 9 und den daran befestigten Türflügeln 2, 3 in Richtung zur Fahrzeugaußenseite verschiebt. Dabei wird die Führungsrolle 45 in dem bogenförmigen Abschnitt 49 der Führungsschiene 43 in Längsrichtung verschoben, so dass sich die Türflügel 2, 3 seitlich verschieben und öffnen. Beim Übergang der Führungsrolle 45 in den parallelen Abschnitt 48 der Führungsschiene 43 beendet die Riegelwelle 32 ihre Rotation, so dass das weitere Drehmoment des elektrischen Getriebemotors 33 nun ausschließlich über die Abtriebswelle 34 und das Zahnrad 35 auf die Gewindespindel 27 übertragen wird. Dabei werden die beiden Spindelmuttern 28, 29 voneinander weg bewegt, so dass die Türflügel 2, 3 entlang der Fahrzeugaußenwand 8 verschoben werden und die Türöffnung 4 freigegeben wird. Der Schließvorgang der Türflügel 2, 3 erfolgt in umgekehrter Bewegungsreihenfolge.

In der Schließstellung der Türflügel 2, 3 befinden sich die Verriegelungen 36, 37 zumindest in einer in Figur 4 dargestellten Totpunktstellung. Wenn bei geschlossenen Türflügeln 2, 3 von innen gegen einen oder beide Türflügel 2, 3 gedrückt wird, wirkt diese Kraft quer bzw. senkrecht zu den Türflügeln 2, 3, wodurch die Riegelwelle 32 gegen den Verbindungsstift 50 drückt, so dass das Verbindungselement 39 aufgrund der kinematischen Verhältnisse nicht aufgedrückt werden kann. Dadurch wird aber lediglich ein Öffnen der Türflügel 2, 3 aufgrund einer quer zu den Türflügeln 2, 3 wirkenden Kraft verhindert. Um darüber hinaus auch bei Erschütterungen, bei denen eine nicht ausschließlich quer zu den Türflügeln 2, 3 wirkende Kraft auf die jeweilige Verriegelung 36, 37 einwirkt, ein ungewolltes Öffnen der Türflügel 2, 3 zu verhindern, ist an der in Figur 2 und Figur 6 linken Verriegelung 36 eine Rückstellfeder 41 als Bestandteil der Verriegelung 36 angeordnet. Die als Biegefeder ausgebildete Rückstellfeder 41 ist mit einem Ende an einem Bolzen 42 angebracht, der in eine Bohrung einer nicht näher dargestellten Platte eingesetzt ist. Das andere Ende der Rückstellfeder 41 ist derart mit dem Verbindungselement 39 gekoppelt, dass der mit der Segmentscheibe 38 verbundene Schenkel des Verbindungselements 39 unter Vorspannung steht, die das Verbindungselement 39 in Verriegelungsstellung drückt, so dass auch eine nicht ausschließlich quer zu den Türflügeln 2, 3 wirkende Kraft keine ungewollte Entriegelung bewirkt. Die Federkraft der Rückstellfeder 41 zur Sicherstellung einer Verriegelung kann darüber hinaus dem praktischen Bedarf des Schwenkschiebetürsystems 1 angepasst werden. Dazu kann die Spannung der Rückstellfeder 41, die durch die Anordnung von Bolzen 42 und Verbindungselement 39 definiert ist, durch Veränderung der Lage des Bolzens 41 nach Art einer Korrektureinrichtung verändert werden. Zu diesem Zweck können mehrere Bohrungen in der nicht näher dargestellten Platte ausgebildet sein, in die der Bolzen 41 unter Änderung der Spannung der Rückstellfeder 41 einsetzbar ist.

## Patentansprüche

1. Schwenkschiebetürsystem (1) eines Fahrzeugs, insbesondere eines Personenbeförderungsfahrzeugs, mit zumindest einem an einer horizontalen Tragstange (7) einer Lagereinheit (9) verschiebbar gelagerten Türflügel (2, 3), der zum Öffnen aus einer Türöffnung (4) ausfahrbar und in seiner Offenstellung an einer Außenwand (8) des Fahrzeugs längs verschiebbar ist und in Bewegungsumkehr die Türöffnung (4) wieder verschließt,
wobei die Lagereinheit (9) senkrecht zur Verschieberichtung des zumindest einen Türflügels (2, 3) aus- und einfahrbar ist und eine zur Tragstange (7) parallele Riegelwelle (32), die über ein Koppelgetriebe die Lagereinheit (9) aus- und einfährt, und einen elektrischen Getriebemotor (33) aufweist, der mit der Riegelwelle (32) verbunden ist und diese rotatorisch antreibt,
**dadurch gekennzeichnet,**
**dass** die Lagereinheit (9) und die Tragstange (7) oberhalb der Türöffnung (4) in den Fahrzeuginnenraum zurückversetzt angeordnet sind und der zumindest eine Türflügel (2, 3) mit der Tragstange (7) über eine winkelförmige Vertikalhalterung (14, 15) verbunden ist.

2. Schwenkschiebetürsystem (1) nach Anspruch 1, **dadurch gekennzeichnet, dass** die Tragstange (7) an ihren beiden Endseiten jeweils an einer Seitenwange (10, 11) der Lagereinheit (9) befestigt ist und dass die jeweilige Seitenwange (10, 11) mittels zumindest einer Rolle (23, 24) in einer Führungsschiene (21, 22) verschiebbar gelagert ist.

3. Schwenkschiebetürsystem (1) nach Anspruch 2, **dadurch gekennzeichnet, dass** die jeweilige Führungsschiene (21, 22) als U-Schiene ausgebildet ist, die über ein Basisblech (20) oder ein Trägerelement (25) an der Fahrzeuginnenwand (26) oder an der Fahrzeugkarosserie befestigt ist.

4. Schwenkschiebetürsystem (1) nach Anspruch 2 oder 3, **dadurch gekennzeichnet, dass** die jeweilige Führungsschiene (21, 22) quer zur Fahrzeugaußenwand (8) und auf der der Tragstange (7) zugewandten Seite der jeweiligen Seitenwange (10, 11) angrenzend an dieser angeordnet ist.

5. Schwenkschiebetürsystem (1) nach einem der vorhergehenden Ansprüche, **dadurch gekennzeichnet, dass** der zumindest eine Türflügel (2, 3) eine Halterung mit einer als Rohrabschnitt (16, 17) ausgebildeten Kugellängsführung aufweist, wobei die Kugellängsführung an der Tragstange (7) verschiebbar gelagert ist.

6. Schwenkschiebetürsystem (1) nach Anspruch 5, **dadurch gekennzeichnet, dass** in Schließstellung des zumindest einen Türflügels (2, 3) der Rohrabschnitt (16, 17) im Wesentlichen mit einer Schließkante (18, 19) des Türflügels (2, 3) bündig abschließt.

7. Schwenkschiebetürsystem (1) nach einem der vorhergehenden Ansprüche, **dadurch gekennzeichnet, dass** die Lagereinheit (9) eine Gewindespindel (27) umfasst, wobei der elektrische Getriebemotor (33) die Gewindespindel (27) und die Lagereinheit (9) über eine mechanische Kopplung (35) antreibt.

8. Schwenkschiebetürsystem (1) nach Anspruch 7, **dadurch gekennzeichnet, dass** der elektrische Getriebemotor (33) in der Lagereinheit (9) parallel zur Gewindespindel (27) angeordnet und über Zahnräder (35) mit der Gewindespindel (27) in Antriebsverbindung steht.

9. Schwenkschiebetürsystem (1) nach Anspruch 7 oder 8, **dadurch gekennzeichnet, dass** die Gewindespindel (27) in den beiden Seitenwangen (10, 11) der Lagereinheit (9) drehbar gelagert ist.

10. Schwenkschiebetürsystem (1) nach einem der Ansprüche 7 bis 9, **dadurch gekennzeichnet, dass** die Gewindespindel (27) parallel zu der Tragstange (7) und der Riegelwelle (32) angeordnet ist.

11. Schwenkschiebetürsystem (1) nach einem der vorhergehenden Ansprüche, **dadurch gekennzeichnet, dass** in Schließstellung des zumindest einen Türflügels (2, 3) eine als Biegefeder ausgebildete Rückstellfeder (41) mit einer die Federkraft der Rückstellfeder (41) einstellbaren Korrektureinrichtung die Riegelwelle (32) in einer Totpunktstellung gedrückt hält.

12. Schwenkschiebetürsystem (1) nach einem der vorhergehenden Ansprüche, **dadurch gekennzeichnet, dass** ein an dem zumindest einen Türflügel (2, 3) befestigter Verbindungsflansch (12, 13), die Vertikalhalterung (14, 15), der Rohrabschnitt (16, 17), eine an einem Verbindungsarm (30, 31) angebrachte Spindelmutter (28, 29) und eine Halterung (46, 47) einstückig, vorzugsweise als ein Gussteil, ausgebildet sind.

## Claims

1. A pivotal sliding door system (1) for a vehicle, in particular, a people carrying vehicle, with at least one door panel (2, 3) mounted in a sliding manner on a horizontal bearing rail (7) of a bearing unit (9), which, for opening, can be displaced outwards from a door opening (4) and, in its opening position, can be slid along an external wall (8) of the vehicle, and which closes the door opening (4) again with a reverse movement,
wherein the bearing unit (9) can be displaced inwards and outwards perpendicular to the direction of sliding of the at least one door panel (2, 3) and provides a locking shaft (32) parallel to the bearing rail (7), which displaces the bearing unit (9) outwards and inwards via a coupling gear, and provides an electric drive motor (33), which is connected to the locking shaft (32) and drives the latter in a rotary manner,
**characterised in that**
the bearing unit (9) and the bearing rail (7) are arranged offset into the vehicle interior above the door opening (4), and the at least one door panel (2, 3) is connected to the bearing rail (7) via an angled vertical mounting (14, 15).

2. The pivotal sliding door system (1) according to claim 1,
**characterised in that**
the bearing rail (7) is attached at its two ends respectively to a lateral jaw (10, 11) of the bearing unit (9) and that each lateral jaw (10, 11) is mounted by means of at least one roller (23, 24) in a sliding manner in a guide rail (21, 22).

3. The pivotal sliding door system (1) according to claim 2,
**characterised in that**
each guide rail (21, 22) is formed as a U-shaped rail which is attached via a baseplate (20) or a bearing element (25) to the vehicle internal wall (26) or to the vehicle body.

4. The pivotal sliding door system (1) according to claim 2 or 3,
**characterised in that**
each guide rail (21, 22) is arranged transversely to the vehicle external wall (8) and on the side facing towards the bearing rail (7) of the respective lateral jaw (10, 11) adjacent to the latter.

5. The pivotal sliding door system (1) according to any one of the preceding claims,
**characterised in that**
the at least one door panel (2, 3) provides a mounting with a longitudinal ball guide formed as a tubular portion (16, 17), wherein the longitudinal ball guide is mounted in a displaceable manner on the bearing rail (7).

6. The pivotal sliding door system (1) according to claim 5,
**characterised in that,**
in the closed position of the at least one door panel (2, 3), the tubular portion (16, 17) closes substantially flush with a closing edge (18, 19) of the door panel (2, 3).

7. The pivotal sliding door system (1) according to any one of the preceding claims,
**characterised in that**
the bearing unit (9) comprises a threaded spindle (27), wherein the electric drive motor (33) drives the threaded spindle (27) and the bearing unit (9) via a mechanical coupling (35).

8. The pivotal sliding door system (1) according to claim 7,
**characterised in that**
the electric drive motor (33) is arranged in the bearing unit (9) parallel to the threaded spindle (27) and provides a driven connection via cogwheels (35) with the threaded spindle (27).

9. The pivotal sliding door system (1) according to claim 7 or 8,
**characterised in that**
the threaded spindle (27) is mounted in a rotatable manner in the two lateral jaws (10, 11) of the bearing unit (9).

10. The pivotal sliding door system (1) according to any one of claims 7 to 9,
**characterised in that**
the threaded spindle (27) is arranged parallel to the bearing rail (7) and the locking shaft (32).

11. The pivotal sliding door system (1) according to any one of the preceding claims,
**characterised in that,**
in the closed position of the at least one door panel (2, 3), a restoring spring (41) formed as a bending spring with a correction device adjusting the spring force of the restoring spring (41) holds the locking shaft (32) in a dead-centre position.

12. The pivotal sliding door system (1) according to any one of the preceding claims,
**characterised in that**
a connecting flange (12, 13) attached to the at least one door panel (2, 3), the vertical mounting (14, 15), the tubular portion (16, 17), a spindle nut (28, 29) attached to a connecting arm (30, 31) and a mounting (46, 47) are formed in one piece, preferably as a cast part.

## Revendications

1. Système de porte oscillo-coulissante (1) d'un véhicule automobile, en particulier d'un véhicule de transport de personnes, comportant au moins un vantail de porte (2, 3), qui est monté coulissant sur une tige de support (7) horizontale d'une unité de palier (9) et qui, pour l'ouverture, peut être extrait hors d'une baie (4) de la porte et, dans sa position ouverte, est apte à coulisser le long d'une paroi extérieure (8) du véhicule et, par une inversion du mouvement, ferme à nouveau la baie (4) de la porte,
l'unité de palier (9) pouvant être déployée et rentrée perpendiculairement au sens de coulissement dudit au moins un vantail (2, 3), et comportant une broche de verrouillage (32), qui est parallèle à la tige de support (7) et qui déploie et rentre l'unité de palier (9) par l'intermédiaire d'un mécanisme à bielle, et un motoréducteur (33) électrique, qui est relié à la broche de verrouillage (32) et actionne celle-ci en rotation,
**caractérisé en ce que**
l'unité de palier (9) et la tige de support (7) sont disposées au-dessus de la baie (4) de la porte en étant agencées en retrait dans l'espace intérieur du véhicule, et ledit au moins un vantail (2, 3) est relié à la tige de support (7) par l'intermédiaire d'un support vertical (14, 15) en forme de cornière.

2. Système de porte oscillo-coulissante (1) selon la revendication 1, **caractérisé en ce que** la tige de support (7) est fixée, au niveau de chacun de ses deux côtés d'extrémité, à une joue latérale (10, 11) de l'unité de palier (9), et **en ce que** la joue latérale (10, 11) respective est montée coulissante au moyen d'au moins un galet (23, 24) dans une glissière (21, 22).

3. Système de porte oscillo-coulissante (1) selon la revendication 2, **caractérisé en ce que** la glissière (21, 22) respective est réalisée sous la forme d'un rail en U, qui est fixé par l'intermédiaire d'une tôle de base (20) ou d'un élément de support (25) contre la paroi intérieure (26) du véhicule ou contre la carrosserie du véhicule.

4. Système de porte oscillo-coulissante (1) selon la revendication 2 ou 3, **caractérisé en ce que** la glissière (21, 22) respective est agencée transversalement à la paroi extérieure (8) du véhicule et sur le côté, orienté vers la tige de support (7), de la joue latérale (10, 11) respective en étant adjacente à celle-ci.

5. Système de porte oscillo-coulissante (1) selon l'une quelconque des revendications précédentes, **caractérisé en ce que** ledit au moins un vantail (2, 3) comporte un support avec un guidage longitudinal à roulements, réalisé sous la forme d'un tronçon de tube (16, 17), le guidage longitudinal à roulements étant monté coulissant sur la tige de support (7).

6. Système de porte oscillo-coulissante (1) selon la revendication 5, **caractérisé en ce que** dans la position de fermeture dudit au moins un vantail (2, 3), le tronçon de tube (16, 17) se termine sensiblement à fleur d'une arête de fermeture (18, 19) du vantail (2, 3).

7. Système de porte oscillo-coulissante (1) selon l'une quelconque des revendications précédentes, **caractérisé en ce que** l'unité de palier (9) comporte une broche filetée (27), sachant que le motoréducteur (33) électrique actionne la broche filetée (27) et l'unité de palier (9) par l'intermédiaire d'un couplage mécanique (35).

8. Système de porte oscillo-coulissante (1) selon la revendication 7, **caractérisé en ce que** le motoréducteur (33) électrique est agencé dans l'unité de palier (9) parallèlement à la broche filetée (27) et est reliée en entraînement avec la broche filetée (27) par l'intermédiaire de roues dentées (35).

9. Système de porte oscillo-coulissante (1) selon la revendication 7 ou 8, **caractérisé en ce que** la broche filetée (27) est montée rotative dans les deux joues latérales (10, 11) de l'unité de palier (9).

10. Système de porte oscillo-coulissante (1) selon l'une quelconque des revendications 7 à 9, **caractérisé en ce que** la broche filetée (27) est agencée parallèlement à la tige de support (7) et à la broche de verrouillage (32).

11. Système de porte oscillo-coulissante (1) selon l'une quelconque des revendications précédentes, **caractérisé en ce que**, dans la position de fermeture dudit au moins un vantail (2, 3), un ressort de rappel (41), réalisé sous forme de ressort de flexion, maintient au moyen d'un dispositif de correction, apte à régler la force du ressort de rappel (41), la broche de verrouillage (32) poussée dans une position de point mort.

12. Système de porte oscillo-coulissante (1) selon l'une quelconque des revendications précédentes, **caractérisé en ce qu'**une bride d'assemblage (12, 13), fixée sur ledit au moins un vantail (2, 3), le support vertical (14, 15), le tronçon de tube (16, 17), un écrou de broche (28, 29), agencé sur un bras de liaison (30, 31), et un support (46, 47) sont réalisés d'un seul tenant, de préférence sous la forme d'une pièce coulée.
